# DEMANDE DE BREVET EUROPEEN

(11) **EP 3 199 478 A1**
(43) Date de publication de la demande: **02.08.2017**
(21) Numéro de dépôt: 17152284.0
(22) Date de dépôt: 19.01.2017
(51) Int. Cl.: B65G 29/00, B65G 29/02, B65G 47/14, B29C 49/42, B65G 43/08

(54) **DISPOSITIF ET MÉTHODE DE CONVOYAGE CONTRÔLÉ**

(30) Priorité: 26.01.2016 FR 1650581
(71) Demandeur: Gebo Packaging Solutions France, 67116 Reichstett (FR)
(72) Inventeur: ROTH, Emmanuel, 67116 REICHSTETT (FR)
(74) Mandataire: Eltzer, Thomas

(57) **Abrégé**

L'invention a pour objet un dispositif de convoyage (1) sélectif de produits (2) qui comprennent une collerette (3) saillante et présentent une symétrie de rotation autour d'un axe produit (4), ledit dispositif comprenant un moyen de convoyage (5) mobile entraînant les produits (2) depuis une zone de prise (6) jusqu'à une zone de sortie (7).

Ce dispositif caractérisé en ce que le moyen de convoyage (5) s'étend le long d'une boucle fermée définissant son mouvement le long d'une direction de convoyage (8) et présente une succession de butées transversales (9) d'entraînement des produits (2), ledit moyen de convoyage (5) étant ouvert de son côté intérieur (10) pour permettre la réception de produits (2) se trouvant à l'intérieur de ladite boucle.

L'invention a aussi pour objet un procédé correspondant.

## Description

La présente invention relève du domaine des lignes industrielles de conditionnement de liquide dans des contenants du type bouteilles en matière plastique, et a pour objet, d'une part, un dispositif de convoyage, assurant l'alimentation en produits de type préformes orientés à une machine de fabrication de contenant, et, d'autre part, un procédé mettant en oeuvre ce dispositif.

Dans ce domaine, la machine de fabrication procède par extension de la préforme pour obtenir le contenant final. Généralement, il s'agit d'une machine ayant une fonction de soufflage : les préformes sont chauffées puis étirées par injection d'air sous pression jusqu'à l'obtention du contenant souhaité.

Les préformes sont fournies à une telle machine les unes après les autres, généralement en colonne large d'une seule préforme. Les préformes doivent alors être reçues par la machine en étant toutes orientées de la même manière. Il est donc nécessaire de prévoir un équipement amont, dit orienteur de préformes, capable d'alimenter cette machine de soufflage en préformes toutes orientées de la même manière, et ce à partir d'un ensemble de préformes disposées en un vrac non organisé.

On connait ainsi des principes à base de rouleaux contrarotatifs, comme par exemple dans US4223778, WO2005070793, EP2554356, US2009155036 ou encore US2014109747. Ces rouleaux sont espacés d'une distance supérieure au corps de la préforme, mais inférieure à sa collerette. Leur rotation permanente déstabilise tous les produits qui ne reposent pas sur les rouleaux en s'étendant entre eux, leur fond vers le bas. Un inconvénient majeur de ce principe est que l'encombrement d'une installation complète est important, en particulier car une longueur significative de rouleaux est nécessaire pour atteindre l'orientation de toutes les préformes. Un autre inconvénient est qu'un mécanisme de recirculation doit être utilisé pour ramener les préformes rejetées jusqu'en amont pour un nouveau cycle.

D'autres principes utilisent des bandes, comme FR2899882 ou encore FR2882739. Les bandes peuvent circuler l'une à côté de l'autre en sens inverse, forçant ainsi les préformes à s'aligner dans le sens du mouvement et retomber alors correctement alignées sur une bande inférieure. Dans certaines réalisations, trois bandes s'étendent l'une à côté de l'autre, la bande centrale s'abaissant progressivement pour assurer que les préformes correctement orientées reposent par leur col sur les deux bandes d'extrémité. Un inconvénient majeur de ce genre de réalisations est la qualité de l'orientation, en ce sens que certaines préformes mal orientées peuvent être convoyées, et/ou que le flux de préformes correctement orientées est donc insatisfaisant, voire que l'encombrement au sol de l'installation assurant l'orientation définitive est trop important.

On connait encore des principes par centrifugation, comme par exemple dans EP1866223, EP2295350 ou encore US2009/0095598, qui proposent d'aligner progressivement les préformes avec leur axe le long d'un rayon du centrifugeur. Il est cependant difficile d'adapter un tel principe à un volume de vrac important, ce qui limite donc l'autonomie du système ou, à tout le moins, complique l'ensemble avec d'éventuelles zones supplémentaires de vrac, etc. En outre, un tel mode de fonctionnement génère beaucoup de poussière et de bruit, compte tenu des frottements constants.

Il existe donc aujourd'hui dans ce domaine un besoin d'améliorer de la façon évoquée ci-dessus les équipements qui servent à fournir à un poste en aval des préformes successives présentant toutes la même orientation dans l'espace.

L'invention vise ainsi à proposer un équipement de fourniture réalisant de façon fiable l'orientation de préformes depuis un vrac dans lequel elles ne présentent aucune orientation contrôlable, et ce dans un empattement réduit, avec une cadence de sortie élevée, accessible pour un opérateur au sol, et/ou générant peu de bruit et de poussière.

Pour ce faire, l'invention propose de réaliser l'orientation des produits au coeur d'un élément tournant qui, s'ils s'y engagement correctement depuis l'intérieur, les entraîne jusqu'à la sortie, les produits mal insérés dans le moyen de convoyage n'étant alors pas amenés jusqu'à la sortie et retombant en zone de prise.

L'invention a ainsi pour objet un dispositif de convoyage sélectif de produits qui comprennent une collerette saillante et présentent une symétrie de rotation autour d'un axe produit, ledit dispositif comprenant un moyen de convoyage mobile entraînant les produits depuis une zone de prise jusqu'à une zone de sortie.

Ce dispositif est caractérisé en ce que le moyen de convoyage s'étend le long d'une boucle fermée définissant son mouvement le long d'une direction de convoyage et présente une succession de butées transversales d'entraînement des produits, ledit moyen de convoyage étant ouvert de son côté intérieur pour permettre la réception de produits se trouvant à l'intérieur de ladite boucle.

L'invention a aussi pour objet une méthode mise en oeuvre par ce dispositif, à savoir un procédé de convoyage de produits qui ont une forme cylindrique et qui présentent, d'une part, une symétrie de rotation autour d'un axe produit, et, d'autre part, une collerette circonférentielle saillante, ledit procédé comprenant, d'une part, une étape consistant essentiellement à élever les produits au cours de leur déplacement, depuis une zone de prise où les produits se trouvent en vrac, jusqu'à une zone de sortie, et ce à l'aide d'un moyen de convoyage mobile formant une boucle fermée, et, d'autre part, une étape consistant essentiellement à éjecter les produits au niveau de la zone de sortie.

Ce procédé est caractérisé en ce que l'élévation est sélective, le moyen de convoyage entraînant les produits situés à l'intérieur de la boucle fermée, orientés avec leur axe produit traversant le moyen de convoyage du côté intérieur vers le côté extérieur.

L'invention sera mieux comprise grâce à la description ci-dessous, qui se base sur des modes de réalisations possibles, expliqués de façon illustrative et nullement limitative, en référence avec les figures annexées, dans lesquelles :

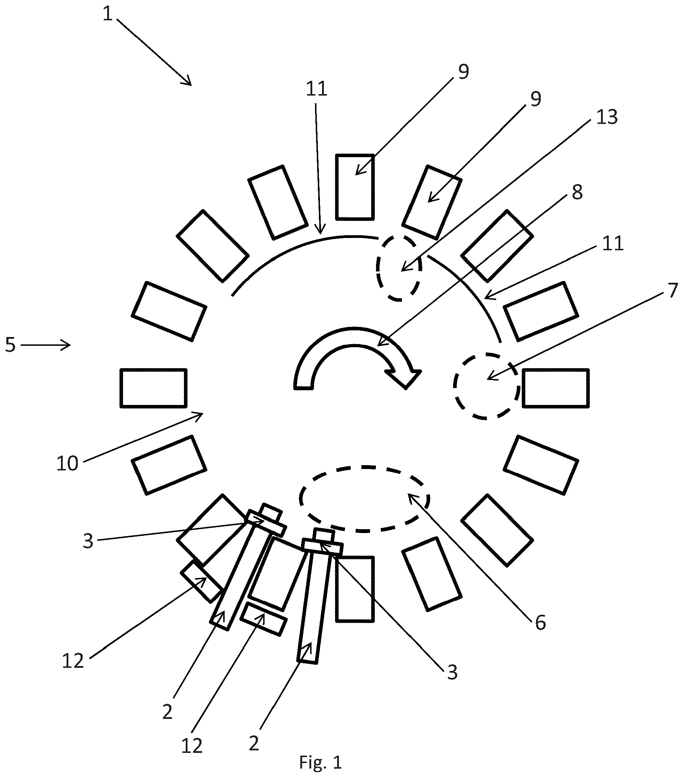

- la figure 1 montre une coupe d'un tel dispositif et le positionnement de deux préformes ;

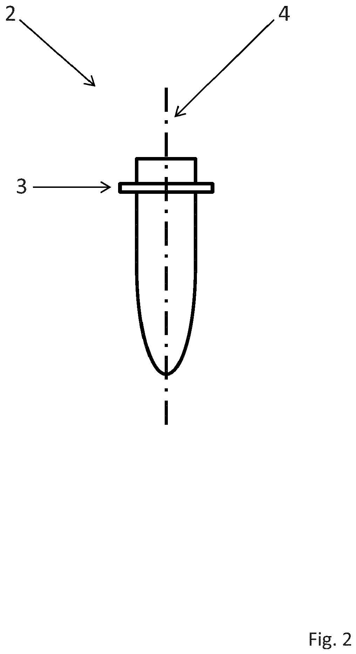

- la figure 2 schématise une préforme à traiter, et

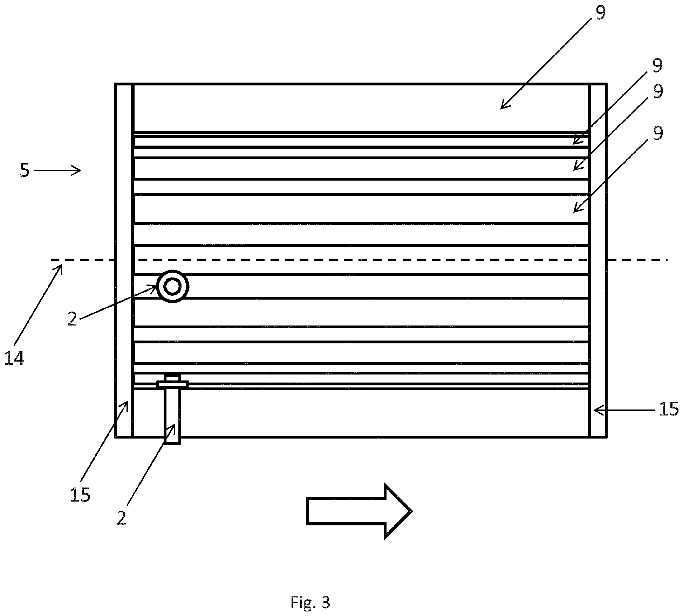

- la figure 3 montre une coupe le long de l'axe de rotation.

L'invention a donc tout d'abord comme objet un dispositif de convoyage 1 sélectif de produits 2 qui comprennent une collerette 3 saillante et présentent une symétrie de rotation autour d'un axe produit 4, ledit dispositif comprenant un moyen de convoyage 5 mobile entraînant les produits 2 depuis une zone de prise 6 jusqu'à une zone de sortie 7.

Ce dispositif de convoyage 1 est sélectif en ce sens que les produits 2 qu'il délivre en sortie sont tous orientés de la même façon, les uns à la suite des autres. Il fonctionne donc comme un dispositif qui déplace les produits 2 d'une zone de prise 6 à une zone de sortie 7, dans la mesure où ces produits 2 présentent une orientation prédéfinie, compatibles pour une alimentation de la machine en aval du dispositif de convoyage 1. Le moyen de convoyage 5 amène donc les produits 2, initialement en zone de prise 6, jusqu'à une zone de sortie 7, dans la mesure où les produits 2 présentent une orientation dans l'espace conforme et répétée d'un produit 2 à l'autre.

Les produits 2 traités sont du type préforme 2 pour bouteille en plastique, ce qui signifie que leur collerette 3 est leur partie la plus saillante par rapport à leur axe produit 4. La collerette 3 sert, comme décrit plus loin, comme surface d'appui contre le moyen de convoyage 5, et, pour un produit 2 normalement engagé, s'étend dans le plan tangent à la trajectoire que suit le moyen de convoyage 5 le long de la boucle fermée.

On notera que la zone de sortie 7 est munie d'au moins une embouchure dimensionnée pour le passage d'un seul produit 2 à la fois, dans le but de garantir un bon maintien en position des produits 2, lors de ce dégagement. Les couloirs qui s'étendent, chacun, à partir d'une embouchure, dimensionnés pour un seul produit 2 de front, peuvent éventuellement ensuite se rejoindre dans une jonction au niveau de laquelle les flux de chaque embouchure sont combinés en un seul flux.

Selon l'invention, le moyen de convoyage 5 s'étend le long d'une boucle fermée définissant son mouvement le long d'une direction de convoyage 8 et présente une succession de butées transversales 9 d'entraînement des produits 2, ledit moyen de convoyage 5 étant ouvert de son côté intérieur 10 pour permettre la réception de produits 2 se trouvant à l'intérieur de ladite boucle. Comme il sera encore décrit plus loin, le moyen de convoyage 5 est ouvert du côté intérieur entre deux butées 9 successives, sous la forme de plusieurs entrefers successifs, où les produits 2 peuvent se loger. Les butées 9 forment des surfaces d'appui pour les collerettes 3 des produits 2 préformes. Ces surfaces d'appui se succèdent pour délimiter la partie intérieure du moyen de convoyage 5 par rapport à la partie extérieure. Ces entrefers sont donc plus larges que le corps des préformes 2 mais plus petits que les collerettes 3. Un des avantages d'une telle construction est qu'en ancrant mécaniquement les butées 9 dans des supports correspondants, l'entrefer entre elles est précis. En outre, la coopération se fait au niveau de la collerette 3, qui est un élément dont le dimensionnement change peu d'un type de produit 2 à l'autre.

Le moyen de convoyage 5 est préférablement sous forme de bande sans fin, fermée sur elle-même. Le moyen de convoyage 5 est donc mobile le long d'une boucle fermée qu'il suit. Le moyen de convoyage 5 présente ainsi un côté intérieur, du côté intérieur de la boucle fermée, et, à l'opposée, un côté extérieur. Les produits 2 sont saisis pas le moyen de convoyage 5 au niveau de son côté intérieur, grâce aux ouvertures créées entre deux butées 9 successives, et se trouvent donc initialement, en zone de prise 6, à l'intérieur de la boucle fermée.

Le moyen de convoyage 5 suit donc une direction de convoyage 8, qui correspond, pour le point considéré, à la direction du mouvement duquel il est animé. A chaque point considéré, la direction de convoyage 8 s'étend donc sensiblement dans un plan tangent à la boucle fermée à ce point particulier. Comme il sera décrit, ce mouvement peut être circulaire. Le moyen de convoyage 5 a aussi une largeur, qui est perpendiculaire à la direction de convoyage 8, et le long de laquelle s'étendent des butées 9 transversales. Les butées transversales 9 sont donc perpendiculaires à l'avance du moyen de convoyage 5. Le moyen de convoyage 5 présente ainsi une succession de butées 9 transversales, qui forment une surface d'appui parallèle tant à la direction de convoyage 8 qu'à ladite largeur. Ces butées 9 sont espacées les unes des autres de façon régulière le long de la direction de convoyage 8.

Ces butées 9 sont suffisamment éloignées l'une de l'autre pour laisser passer le corps d'un produit 2 mais non la collerette 3, de sorte que la partie d'extrémité des butées 9 du côté intérieur forme une surface d'appui pour les collerettes 3.

Les butées 9 sont éloignées les unes des autres au moins au niveau de la circonférence intérieure du moyen de convoyage 5, ce qui permet aux produits 2, grâce aux ouvertures débouchantes ainsi créées, d'être reçus au sein du moyen de convoyage 5 dans les entrefers formés entre deux butées 9 successives. L'ancrage mécanique des butées 9 contribue notamment à une bonne précision de l'entrefer qui les sépare, et garantit ainsi que tout type de produit 2 soit correctement en appui sur elles.

En zone de prise 6, la direction de convoyage 8 est sensiblement horizontale. Ainsi, un produit 2 préforme, avec une collerette 3 décalée axialement par rapport au centre de gravité de la préforme, s'il se trouve dans une position avec la tranche de la collerette 3 en appui sur les butées 9, peut pivoter en appui sur les butées 9 grâce à ce porte à faux et finalement aboutir en extension perpendiculaire tant à la direction de convoyage 8 qu'à la largeur du moyen de convoyage 5.

Préférablement, la zone de prise 6 se trouve à l'intérieur de la boucle fermée, pour que les produits 2 puissent, sous l'effet de la pesanteur, se réorienter ou simplement s'engager dans les ouvertures du moyen de convoyage 5, côté intérieur. Comme les produits 2 sont du côté intérieur du moyen de convoyage 5, ceux mal engagés retombent dans la zone de prise 6, ce qui évite le recours à un moyen de recirculation forcée.

Le réglage de l'entrefer entre deux butées 9 successives peut se faire avec, pour chaque paire de butées 9 entre lesquelles se trouve un entrefer d'accueil, au moins l'une d'elle mobile par rapport à l'autre, voire les deux. Il est aussi envisageable qu'une butée 9 soit construite avec, d'une part, un support de structure, et, d'autre part, fixée de façon démontable sur ledit support, une pièce dont la dimension correspond à l'entrefer souhaité.

Selon une caractéristique additionnelle possible, le dispositif de convoyage 1 comprend, en outre, un moyen de blocage qui retient les produits 2 dans le moyen de convoyage 5. Le moyen de blocage permet d'éviter que les produits 2 pris dans le moyen de convoyage 5 et correctement engagés n'en retombent lorsqu'ils sont orientés tête en bas, et que la collerette 3 se trouve alors sous les butées 9. Le moyen de blocage peut être contrôlé, en ce sens que le passage entre un état actif, dans lequel il bloque les produits 2, et un état inactif, dans lequel il ne les retient pas, peut être piloté. Il peut aussi s'agir d'une simple peau en vis-à-vis des têtes des préformes 2 sur au moins une partie du parcours.

Ainsi, les produits 2 préformes peuvent facilement entrer dans le moyen de convoyage 5 entre deux butées 9 successives, le moyen de blocage n'empêchant pas cette insertion. Une fois que les produits 2 sont correctement engagés et insérés dans le moyen de convoyage 5, le moyen de blocage entre en fonctionnement et verrouille les produits 2 en position pour les maintenir correctement positionnés dans le moyen de convoyage 5

Le moyen de blocage peut agir à n'importe quel endroit de la préforme 2 le long de son axe produit 4. Il peut saisir le produit 2 au niveau de son extrémité proche de la collerette 3, au niveau de la collerette 3 elle-même, au niveau de l'extrémité opposée, etc. L'avantage d'agir au niveau de l'extrémité ouverte, proche de la collerette 3, est que cette portion a des dimensions qui sont relativement les mêmes pour tous les produits 2 à traiter.

Préférablement le moyen de blocage agit sur une portion du trajet entre la zone de prise 6 et la zone de sortie 7. Avantageusement, le moyen de blocage peut comprendre une contre plaque 11 qui agit au moins au niveau de la zone de sortie 7, pour garantir le positionnement des produits 2. Une telle contre plaque 11 peut être complétée par un moyen de serrage des produits 2 dans l'entrefer, du type à volet ou à guillotine, etc., qui est alors déverrouillé lorsque les produits 2 doivent être éjectés ou sortis.

Ainsi, selon une caractéristique additionnelle possible, le moyen de blocage comprend une plaque 11 située en vis-à-vis du moyen de convoyage 5, du côté intérieur de la boucle fermée, et s'étendant au moins le long d'une partie de ladite boucle. Cette plaque 11 suit la forme de la boucle fermée, du côté intérieur, à distance, et évite que les produits 2 ne retombent en zone de prise 6, leur éventuel dégagement radial des butées 9 les amenant contre cette plaque 11. Les produits 2 sont alors pris entre, d'une part, la plaque 11, et, d'autre part, les butées 9 contre lesquelles repose leur collerette 3.

Dans des réalisations possibles, le moyen de blocage comprend des volets 12, embarqués sur le moyen de convoyage 5 du côté extérieur de la boucle fermée et mobiles pour limiter l'espace entre deux butées 9 dans lequel les produits 2 s'étendent. Ces volets 12 sont mobiles en rotation et/ou en translation, pour limiter l'espace disponible aux produits 2 et ainsi les bloquer en position dans un état actif.

Les volets 12 sont montés du côté extérieur ou du côté intérieur par rapport au profil circulaire défini par les surfaces d'appui des butées 9 successives. Ils peuvent donc venir contre les produits 2 à différents endroits le long de l'axe produit 2.

Dans les cas utilisant tant une plaque 11 que des volets, la plaque 11 s'étendant préférablement au niveau de la zone de sortie 7 de sorte à éviter que les produits 2 ne se dégagent du moyen de convoyage 5 alors que les volets 12 n'agissent plus mais libèrent alors les produits 2.

Selon une caractéristique additionnelle possible, les volets 12 sont déplacés sous l'effet de la gravité. En effet, comme ils sont montés sur les butées 9 qui circulent en boucle fermée autour d'un axe environ horizontal, les volets changent progressivement d'orientation par rapport à la verticale, ce qui permet d'utiliser leur propre poids pour les faire se déplacer vers une position de fermeture, ou vers une position d'ouverture. Ces volets 12 s'étendent parallèlement aux butées 9. Ils peuvent être montés grâce à des pions circulant dans des ouvertures oblongues correspondantes, le mouvement relatif étant provoqué par la mise en mouvement du moyen de convoyage 5 et le changement d'orientation conséquent.

Selon une autre caractéristique additionnelle possible, les volets 12 sont déplacés par engagement mécanique avec une came fixe, en particulier fixe en rotation, et qui ne suit donc pas ce mouvement du moyen de convoyage 5. Cette came peut être réglable voire contrôlable pour faire passer les volets 12 d'un état à l'autre. Ainsi, il est par exemple envisageable de piloter cette came pour qu'elle change de position et ouvre alors les volets 12 lorsque le ou les produits 2 qu'ils maintiennent sont détectés au moins partiellement défectueux et passent par une zone de rejet 13. Cela permet d'utiliser l'état ouvert ou fermé des volets pour rejeter avant éjection des produits 2 éventuellement non tous conformes le long d'une paire de butées 9.

Ainsi, selon une caractéristique additionnelle possible, le moyen de blocage est piloté pour libérer, le cas échéant, les produits 2 au niveau d'une zone de rejet 13 se trouvant avant la zone de sortie 7 et à partir de laquelle ils peuvent alors quitter le moyen de convoyage 5, et retomber notamment en zone de prise 6 en cas de non-conformité d'orientation ou être expulsés du dispositif de convoyage 1 en cas de non-conformité structurelle des produits 2.

Le dispositif de convoyage 1 comprend notamment, en outre, d'une part, un moyen de vérification des produits 2 dans une zone amont à la zone de rejet 13, et, d'autre part, une unité de pilotage reliée au moyen de contrôle et qui actionne le moyen de blocage en cas de détection d'une anomalie.

Selon une autre caractéristique additionnelle possible du dispositif de convoyage 1, il comprend, en outre, un dispositif d'éjection qui agit en zone de sortie 7 pour pousser les produits 2 le long des butées 9 transversales et les éjecter du moyen de convoyage 5 transversalement à la direction de convoyage 8. Comme il a déjà été précisé, la zone de sortie 7 présente une embouchure, voire plusieurs, chacune étant dédiée à un canal de circulation en aval, dimensionné pour un seul produit 2 de front.

Le dispositif d'éjection agit alors par poussée mécanique depuis le côté du moyen de convoyage 5 qui est opposé à celui où se trouve la zone de sortie 7, et agit sur l'ensemble des produits 2 qui se trouvent entre une paire de butées 9 pour les pousser vers l'embouchure.

Dans certaines réalisations possibles, le moyen de convoyage 5 prend la forme d'un tambour cylindrique creux présentant une symétrie de rotation autour d'un axe de tambour 14 s'étendant sensiblement horizontalement, les butées transversales 9 s'étendant le long de génératrices et étant maintenues espacées les unes des autres par une paire de flasques 15 auxquelles elles sont fixées par leurs extrémités, ledit tambour étant mobile en rotation autour de l'axe de tambour 14.

La zone de prise 6 se trouve notamment au coeur du tambour, en partie inférieure, la zone de sortie 7 se trouve notamment en partie haute ou encore sur un côté, par exemple après une rotation de trois quarts de tour, la zone de rejet 13 se trouvant notamment au-dessus de la zone de prise 6, en amont de la zone de sortie 7.

Les butées 9 sous forme de poutrelles peuvent être montées dans une flasque 15 avec possibilité de déplacement par exemple radial, par exemple avec une ouverture oblongue, ce qui permet alors d'ajuster par réglage l'écartement entre deux butées 9 successives, et donc la taille de l'entrefer qui doit accueillir le corps des préformes 2. Dans l'absolu, seule l'une des butées 9 définissant l'entrefer peut être avec possibilité de réglage dans les flasques 15, l'autre n'ayant qu'une seule position de montage.

Un tel déplacement de butées 9 qui n'ont pas de fonction structurelle essentielle peut par exemple être effectué par un actionneur, du type moteur électrique avec jeu d'engrenage et/ou bielles, cardans, etc.

Il est aussi envisageable de monter des butées 9 qui sont dédiées au support des produits 2 et qui n'ont pas de fonction structurelle dans le moyen de convoyage 5 en tambour, cette fonction étant assurée par des poutrelles de structure dédiées à cela, et n'ayant alors, quant à elles, pas d'interaction prévue avec les produits 2. Le réglage des butées 9 en position, et donc le réglage de l'entrefer entre elles est davantage simplifié.

L'invention a aussi pour objet un procédé mettant en oeuvre le dispositif tel que décrit ci-dessus, à savoir un procédé de convoyage de produits 2 qui ont une forme cylindrique et qui présentent, d'une part, une symétrie de rotation autour d'un axe produit 4, et, d'autre part, une collerette 3 circonférentielle saillante, ledit procédé comprenant, d'une part, une étape consistant essentiellement à élever les produits 2 au cours de leur déplacement, depuis une zone de prise 6 où les produits 2 se trouvent en vrac, jusqu'à une zone de sortie 7, et ce à l'aide d'un moyen de convoyage 5 mobile formant une boucle fermée, et, d'autre part, une étape consistant essentiellement à éjecter les produits 2 au niveau de la zone de sortie 7.

Les produits 2 éjectés en zone de sortie 7 sont tous orientés de la même manière, et l'intérêt de l'élévation sur le trajet entre la zone de prise 6 et la zone de sortie 7 est de contribuer à éliminer les produits 2 qui ne présenteront pas l'orientation souhaitée dans la zone de sortie 7.

Les produits 2 qui arrivent en zone de sortie 7 sont donc normalement tous conformes, et tous les produits 2 qui y arrivent sont alors éjectés.

Selon l'invention, l'élévation est sélective, le moyen de convoyage 5 entraînant les produits 2 situés à l'intérieur de la boucle fermée, orientés avec leur axe produit 4 traversant le moyen de convoyage 5 du côté intérieur vers le côté extérieur, notamment essentiellement perpendiculaire à ladite boucle fermée.

Le moyen de convoyage 5 n'entraîne donc pas les produits 2 qui s'étendent parallèlement à l'axe fixe autour duquel il circule, mais il n'amène jusqu'en zone de sortie 7 que les produits 2 qui s'étendent avec un axe produit 4 qui traverse la boucle fermée. Une extrémité d'un tel produit 2 va donc vers le côté intérieur du moyen de convoyage 5, alors que l'autre extrémité va vers le côté extérieur. Les produits 2 non entraînés jusqu'en zone de sortie 7 retombent en zone de prise 6. Plus précisément, les produits 2 orientés de cette manière avec en outre leur plus petite partie depuis la collerette 3 dirigée vers l'extérieur de la boucle fermée, et leur plus grande partie dirigée vers l'intérieur, sont eux aussi renvoyés en zone de prise 6.

Les produits 2 s'engagent donc dans le moyen de convoyage 5 depuis le côté intérieur jusqu'à ce que leur collerette 3 vienne en appui sur des butées 9. La partie des produits 2 en appui dans le moyen de convoyage 5 se trouve donc du côté intérieur de la boucle fermée qu'il suit. Comme il sera encore décrit plus loin, une telle configuration facilite l'insertion des produits 2, mais aussi leur chute vers la zone de prise 6 en cas de non-conformité. L'avantage de retomber en zone de prise 6 en cas de mauvaise orientation est qu'il n'est alors pas nécessaire d'intégrer un appareil de recirculation des préformes éjectées pour défaut d'orientation.

L'élévation est donc sélective en ce sens que c'est lorsque les produits 2 sont élevés que ceux qui ne sont pas correctement engagés ont tendance à quitter le moyen de convoyage 5, et ce grâce au changement d'orientation par rapport à la pesanteur que subit pendant cette élévation la surface d'appui sur laquelle vient la collerette 3 et qui est portée par les butées 9, ce changement d'orientation étant provoqué par la configuration en boucle fermée.

Selon une caractéristique additionnelle possible du procédé, il comprend une étape consistant essentiellement à bloquer en position les produits 2 entraînés par le moyen de convoyage 5, en particulier uniquement ceux correctement engagés contre les butées 9. Ce blocage évite alors aux produits 2 de se dégager des butées 9, notamment par un mouvement le long de leur axe produit 4, qui aurait tendance à faire se décoller la collerette 3 des butées 9.

Selon une autre caractéristique additionnelle possible, en cas de non-conformité, les produits 2 sont relâchés, avant leur passage par la zone de sortie 7, lorsqu'ils passent par une zone de rejet 13, notamment une zone de rejet 13 située en hauteur pour provoquer une chute des produits 2. La non-conformité peut être une non-conformité d'orientation dans le moyen de convoyage, ou encore un défaut structurel intrinsèque du ou des produits 2.

Selon une caractéristique additionnelle possible du procédé, il comprend une étape d'éjection, au cours de laquelle les produits 2, dans la zone de sortie 7, sont dégagés du moyen de convoyage 5 transversalement au mouvement de ce dernier, le moyen de convoyage 5 comprenant notamment une succession de butées transversales 9 espacées, accueillant entre deux telles butées 9 une rangée de produits 2, les produits 2 étant éjectés une rangée après l'autre, l'éjection créant ainsi un flux de sortie de produits 2 large d'un seul produit 2. Bien entendu, les produits 2 sont normalement débloqués avant leur éjection.

Après cette éjection, les produits 2 sont délivrés par le dispositif de convoyage 1. Les produits 2 éjectés à ce stade présentent donc tous la même orientation, les uns derrière les autres.

Enfin, dans des modes de réalisation possibles, entre la zone de prise 6 et la zone de sortie 7, le moyen de convoyage 5 fait passer les produits 2 par au moins une zone de traitement située sur le trajet des produits 2 entre lesdites zones, tel qu'une ionisation ou une séparation de produits 2 emboîtés l'un dans l'autre. Un des avantages de disposer diverses zones de traitement au fil du trajet des produits 2 sous l'effet du moyen de convoyage 5 est bien entendu qu'une même architecture peut alors être utilisée pour l'exécution de différents processus de traitement sur les produits 2, comme par exemple aussi une détection optique, et ce sans augmenter le gabarit du dispositif de convoyage 1 puisque ces appareils peuvent se trouver à l'intérieur de la boucle fermée.

Dans le mode de réalisation illustré aux figures annexées, le dispositif de convoyage 1 se présente essentiellement sous la forme d'un tambour rotatif, au coeur duquel les produits 2 préformes sont déposées en partie inférieure.

Ce dispositif de convoyage 1 est donc destiné à alimenter en préformes une machine en aval, ayant une fonction de soufflage. Ces préformes sont chauffées et étirées jusqu'à obtenir la forme finale du contenant. Le dispositif de convoyage 1 sert à fournir à une telle machine des produits 2 sous forme de préformes qui ont toutes la même orientation dans l'espace. Le dispositif de convoyage 1 génère donc un flux de préformes formant produits 2 qui représente une colonne large d'un tel produit 2. Les préformes sont initialement déposées sous forme d'un vrac, et donc d'un ensemble de produits 2 dont l'orientation n'est pas maîtrisée. Dans cet amas les préformes ont une orientation quelconque et l'une des fonctions du dispositif de convoyage 1 est alors de transformer un tel ensemble de produits 2 d'agencement libre en une colonne unifilaire de produits 2 tous orientés de la même manière.

Pour ce faire, le dispositif de convoyage 1 est muni d'un tambour creux tournant. La paroi périphérique de ce tambour est formée par un moyen de convoyage 5, qui est donc agencé en boucle fermée. Ce moyen de convoyage 5 suit une boucle fermée dans un plan vertical de sorte que les préformes qu'il entraîne sont au moins temporairement élevées. C'est au cours de cette élévation que seules les préformes correctement orientées sont entraînées par le moyen de convoyage 5, alors que celles ayant une orientation différente ne sont pas entraînées vers le haut par le moyen de convoyage 5. Ce convoyage sélectif en fonction de l'orientation des préformes contribue à assurer que le dispositif de convoyage 1 fournit bien des préformes toujours orientées de la même manière.

Plus précisément, le moyen de convoyage 5, qui définit la circonférence du tambour du dispositif de convoyage 1, se présente sous la forme d'une succession de butées transversales 9 qui permettent d'engager et d'entraîner les préformes.

Le moyen de convoyage 5 forme ainsi un profil circulaire autour d'un axe de tambour 14, qui est normalement horizontal. Le moyen de convoyage 5 se déplace en suivant une rotation autour de cet axe de tambour 14, définissant ainsi une direction de convoyage 8 le long de laquelle il entraîne avec lui les préformes qu'il engage. L'axe de tambour 14 est donc perpendiculaire à la direction de convoyage 8.

La dimension du tambour le long de l'axe de tambour 14, c'est-à-dire sa largeur, impacte le nombre maximum de préformes que le dispositif de convoyage 1 peut emporter le long d'une butée transversale 9.

Les butées 9 s'étendent parallèlement à l'axe de tambour 14 et sont les unes à côté des autres le long de la direction de convoyage 8. Les butées 9 sont décalées les unes des autres pour que des préformes puissent être reçues entre deux butées 9 successives. Une paire de butées 9 adjacentes définit donc un entrefer dans lequel les préformes peuvent s'insérer.

Les préformes présentent une forme de cylindre avec symétrie de rotation autour d'un axe produit 4. Une préforme présente ainsi un corps, à partir duquel s'étend, en saillie, une collerette 3 circonférentielle. La collerette 3 représente la zone de la préforme la plus éloignée de l'axe produit 4. La préforme a deux extrémités opposées le long de l'axe produit 4 : l'une d'elle, ouverte, formera le buvant du contenant final et est généralement pourvue d'un filetage pour coopérer avec un bouchon à visser, l'autre extrémité, fermée, à l'opposée, formera le fond du contenant final. La collerette 3 est plus proche de l'extrémité ouverte, avec une dimension similaire à la hauteur d'un bouchon, que de l'extrémité fermée.

Deux butées 9 successives du moyen de convoyage 5 sont alors éloignées le long de la direction de convoyage 8, perpendiculairement à l'axe de tambour 14, d'une distance qui est supérieure au diamètre du corps des préformes, ce diamètre étant en tout point plus faible que le diamètre de la collerette 3. Cet entrefer est cependant plus petit que le diamètre de la collerette 3. Ainsi, le corps d'une préforme 2 peut s'insérer entre deux butées 9, et le mouvement d'insertion sera stoppée lorsque la collerette 3 viendra en appui contre les butées 9.

Le moyen de convoyage 5 emmène donc, depuis la zone de prise 6 où elles sont en vrac, les préformes 2 qui sont insérées entre deux butées 9 successives, reposant sur ces butées 9 avec leur collerette 3. Compte tenu du trajet d'élévation qui suit la zone de prise 6, les préformes 2 mal orientées dans le moyen de convoyage 5, qui les entraîne sans pour autant qu'elles soient réellement engagées comme décrit plus haut, retombent le long du moyen de convoyage 5 et retournent en zone de prise 6.

Ces préformes 2 mal orientées sont notamment celles dont l'axe produit 4 s'étend le long de l'axe de tambour 14 et qui reposent donc sur les butées 9 parallèlement à elles. De la même manière, les préformes 2 qui sont orientées vers l'intérieur avec leur axe produit 4 le long d'un rayon du moyen de convoyage 5, ce dernier étant circulaire autour de l'axe de tambour 14, retombent sous l'effet de la gravité. En effet, ces préformes 2 ont une partie en porte à faux significative, à savoir celle entre la collerette 3 et l'extrémité de fond de la préforme 2, alors que la partie complémentaire de la préforme, entre la collerette 3 et l'extrémité ouverte, est engagée entre deux butées 9 et ne peut pas empêcher le basculement de la préforme 2 sous l'effet de son poids lors de l'élévation et pivotement associé. L'espace entre deux butées 9 successives est donc légèrement plus grand que le diamètre du corps de la préforme 2, pour permettre un jeu suffisant menant à la chute de la préforme, le cas échéant.

Ainsi, grâce à l'élévation des préformes 2 qu'il provoque, le moyen de convoyage 5 n'entraîne normalement vers la zone de sortie 7 que les préformes 2 qui sont engagées entre deux butées 9 avec leur axe produit 4 le long d'un rayon, perpendiculaire à l'axe de tambour 14, et donc perpendiculaire à la boucle fermée que suit le moyen de convoyage 5, orientées de sorte que l'extrémité ouverte de la préforme 2 se trouve, par rapport à l'extrémité fermée, du côté intérieur du moyen de convoyage 5 et donc de la boucle fermée qu'il suit.

Les préformes 2 s'engagent donc dans le moyen de convoyage 5 depuis l'intérieur de ce dernier. Les préformes 2 se trouvent initialement à l'intérieur du moyen de convoyage 5 et s'insèrent entre deux butées 9 pour un engagement et un entraînement par le moyen de convoyage 5 en se dirigeant vers la périphérie extérieure du moyen de convoyage 5, s'arrêtant dans ce mouvement dès que les collerettes 3 arrivent contre les butées 9.

La zone de prise 6 se trouve ainsi en partie basse du cylindre creux définissant la boucle fermée que suit le moyen de convoyage 5 dans son mouvement. En zone de prise 6, les préformes 2 se trouvent alors en vrac au-dessus du moyen de convoyage 5 qui se déplace sous elles. C'est donc la gravité qui a tendance à faire bouger les préformes 2 pour qu'elles s'insèrent entre deux butées 9 avec leur axe produit 4 le long d'un rayon. On notera que la pesanteur peut avoir pour effet de faire pivoter la préforme dont la collerette 3 est en appui sur les butées 9 mais pas encore correctement alignées le long d'un rayon.

Les préformes 2 s'engagent donc dans le moyen de convoyage 5 depuis son côté intérieur avec un mouvement d'insertion depuis l'intérieur vers l'extérieur. Plusieurs préformes 2 s'engagent entre deux butées 9 successives. Ainsi, entre deux butées 9 successives, le moyen de convoyage 5 entraîne une pluralité de préformes 2 sous forme de lot, les produits 2 préformes étant alignées dans l'entrefer séparant deux butées 9 et donc alignés le long de l'axe de tambour 14. On comprend qu'il peut exister un écart entre deux produits 2 successifs dans la direction de l'axe de tambour 14, puisque les produits 2 s'insèrent dans le moyen de convoyage 5 à partir de leur position initiale en zone de prise 6, qui peut être variée le long de l'axe de tambour 14. Le vrac peut en effet s'étendre sur toute la largeur du moyen de convoyage 5, c'est-à-dire sa dimension intérieure le long de l'axe de tambour 14, ce dernier étant par ailleurs préférablement sensiblement horizontal.

Les préformes correctement engagées dans le moyen de convoyage 5 suivent ensuite son mouvement de rotation circulaire autour de l'axe de tambour 14, jusqu'à une zone de sortie 7. Comme le moyen de convoyage 5 a un mouvement circulaire et que la zone de prise 6 est en partie basse de ce cercle, la zone de sortie 7 est généralement plus haute que la zone de prise 6.

En zone de sortie 7, les préformes 2 sont dégagées pour être alimentées à la machine en aval. Cette sortie se fait en poussant les préformes 2 parallèlement à l'axe de tambour 14 pour qu'elles passent par une embouchure de dimension adaptée. En aval de cette embouchure, les préformes 2 continuent leur circulation dans un canal de dimensions adaptées, sous forme d'un flux monocolonne, c'est-à-dire large d'un seul produit 2, les préformes étant l'une derrière l'autre.

Le dispositif de convoyage 1 fait passer l'une après l'autre à travers cette embouchure les préformes 2 qui formeront le flux de sortie. Afin d'éviter les risques de coincement, la circulation à travers cette embouchure se fait avec une seule préforme 2 à la fois, de sorte qu'il n'est pas nécessaire d'organiser une convergence de plusieurs flux parallèles. L'embouchure a une dimension adaptée et une géométrie correspondante aux préformes 2, puisqu'il reste nécessaire de les y maintenir en position lors de l'évacuation.

Il est bien entendu envisageable d'aménager plusieurs telles embouchures. Dans ce cas, une colonne large d'un seul produit 2 passe par chaque embouchure, et les colonnes sont ensuite mises l'une derrière l'autre en aval, pour former une seule et même colonne.

Ainsi, les préformes 2 sont dégagées du moyen de convoyage 5 de la façon suivante. L'ensemble des préformes 2 qui se trouvent dans l'entrefer créé par une même paire de butées 9 est poussé transversalement, le long de l'axe de tambour 14, lorsqu'elles sont en vis-à-vis de la zone de sortie 7. Une fois cet entrefer vidé, le suivant est traité et les préformes 2 qui sont engagées dans cet entrefer sont donc à leur tour poussées à travers l'embouchure de la zone de sortie 7. Le lot formé par l'ensemble des préformes qui se trouvent prises dans l'entrefer entre deux butées 9 successives est donc dégagé une fois que le lot précédent a été entièrement dégagé.

Grâce à son mouvement de rotation continu, le moyen de convoyage 5 amène en permanence en vis-à-vis de la zone de sortie 7 un nouvel entrefer et donc l'ensemble des préformes 2 qu'il contient et qui sont engagées dans cet entrefer.

L'embouchure en zone de sortie 7 est dimensionnée pour une colonne large d'un seul produit 2, et le contenu d'un seul entrefer est dégagé simultanément. Ainsi, à chaque instant, une colonne ou rangée large d'un seul produit 2 passe par la zone de sortie 7 ce qui évite l'agencement d'une zone de convergence de plusieurs flux parallèles devant aboutir à un flux monocolonne en sortie de dispositif de convoyage 1, et les risques de coincement associés à une telle convergence.

Le moyen de convoyage 5 prend préférablement la forme d'un tambour rotatif circulaire autour de son axe de symétrie, à savoir l'axe de tambour 14. Ce tambour est défini par des butées 9 successives, maintenues à leurs extrémités dans des flasques 15 planes, disposées perpendiculairement à l'axe de tambour 14. Les préformes 2 sont préférablement alimentées à l'intérieur de la boucle fermée que suit le moyen de convoyage 5 depuis un côté du moyen de convoyage 5, à savoir depuis une extrémité le long de l'axe de tambour 14. La flasque 15 correspondante est donc évidée et prend la forme d'une couronne pour fournir un accès à l'intérieur du tambour. La zone de sortie 7 est aménagée à une extrémité axiale du moyen de convoyage 5, préférablement l'extrémité opposée à celle d'où les produits 2 sont amenées au coeur du tambour. La flasque 15 correspondante est munie de passages dimensionnés pour que les préformes puissent circuler à travers elle au niveau de ces passages et rejoindre l'embouchure de la zone de sortie 7.

Préférablement, les préformes 2 sont dégagées transversalement vers la zone de sortie 7 grâce à un poussoir qui se déplace essentiellement le long de l'axe de tambour 14, en face de la zone de sortie 7. Ce poussoir agit donc contre la préforme la plus éloignée de la zone de sortie 7 le long de la butée 9 et la pousse vers la suivante et ainsi de suite jusqu'à ce que toutes les préformes 2 alignées soient aussi compactées, les unes contre les autres, au moment du passage en zone de sortie 7. L'embouchure de la zone de sortie 7 voit donc circuler des trains compacts de préformes 2, dans lesquels elles sont les unes contre les autres, sous l'effet de l'action d'un poussoir sur la première d'entre elles.

Le poussoir agit à proximité de la collerette 3 plutôt qu'au niveau de l'extrémité de fond du produit 2, afin d'éviter que les produits 2 ne s'arcboutent et se bloquent, la collerette 3 formant point d'appui pour une rotation en cas de poussée mécanique trop éloignée d'elle. Le poussoir peut agir du côté extérieur ou du côté intérieur par rapport au moyen de convoyage 5, la frontière entre le côté extérieur et le côté intérieur étant éventuellement définie par la succession des surfaces de butées sur lesquelles les collerettes 3 peuvent venir.

Comme expliqué plus haut, les préformes 2 s'engagent dans le moyen de convoyage 5 depuis une zone de prise 6 située à l'intérieur de la boucle fermée qu'il forme. Une fois correctement engagée, et donc dans une orientation prédéfinie pour une fourniture de préformes 2 toujours orientées de la même façon, les préformes 2 arrivent en zone de sortie 7. Les surfaces d'appui que forment les butées 9 sont essentiellement horizontales en zone de prise 6 et, sous l'effet du déplacement du moyen de convoyage 5 le long d'une boucle fermée circulaire, elles changent peu à peu d'orientation jusqu'à devenir verticale. Ce changement d'orientation des surfaces d'appui permet en particulier de faire retomber les préformes 2 qui ne sont pas correctement engagées dans l'entrefer et donc de ne convoyer plus en aval que les préformes qui sont effectivement engagées avec leur corps dans l'entrefer entre deux butées 9.

En zone de prise 6, les surfaces d'appui se trouvent donc normalement dans la partie haute des butées 9. Compte tenu du mouvement en boucle fermée, on comprend qu'au cours du cycle de déplacement, les surfaces d'appui se trouvent au moins temporairement en partie basse des butées 9. Autrement dit, en zone de prise 6, les collerettes 3 arrivent au-dessus des butées 9, alors qu'elles se retrouvent à un moment du cycle, au-dessous des butées 9, et les préformes 2 ne reposent alors plus sur ces supports 9 pour compenser la gravité.

En fonction de la localisation de la zone de sortie 7 sur le trajet des préformes 2 depuis la zone de prise 6, il peut donc être nécessaire de prévoir une solution du type moyen de blocage pour éviter la chute des préformes, ne reposant alors plus sur les butées 9.

Ainsi, un contre guide peut être prévu en vis-à-vis du moyen de convoyage 5 au moins pour la partie où le profil du circuit fermé fait que les préformes 2 ne reposent plus sur les butées 9. Ce contre guide peut prendre la forme d'une plaque 11 qui épouse la géométrie du trajet du moyen de convoyage 5 à cet endroit. Par exemple, il peut s'agir d'une plaque 11 présentant une base sous forme d'arc de cercle, s'étendant parallèlement à l'axe de tambour 14.

Cette plaque 11 se trouve à distance des surfaces de contact que forment les butées 9. Cette distance est légèrement supérieure à la longueur de la préforme entre la collerette 3 et l'extrémité ouverte. Cette plaque 11 évite que les préformes 2 ne se retirent de l'entrefer et crée une zone d'accueil jusqu'aux surfaces d'appui que portent les butées 9.

Les préformes 2 peuvent être retenues dans le moyen de convoyage 5 grâce à une solution de verrouillage qui agit au niveau de la tête des produits 2, c'est-à-dire de leur extrémité proche de la collerette 3, ce qui présente l'avantage d'une coopération mécanique avec une portion des préformes 2 dont le dimensionnement change peu en fonction des produits 2, ce qui assure une certaine flexibilité et adaptabilité du dispositif de convoyage 1.

Il est aussi envisageable de retenir les préformes dans les entrefers en les resserrant au moment opportun, par exemple avec un volet 12 qui vient plaquer les préformes 2 contre l'une des butées 9. Dans certains cas particuliers, les butées 9 forment un entrefer qui est moins profond que la longueur des préformes entre leur collerette 3 et leur extrémité de fond. Dans ces cas, les préformes 2 dépassent du fond des butées 9. Il est alors possible de prévoir, au niveau du fond d'une des deux butées 9 formant une paire définissant un entrefer dans lequel les préformes 2 sont reçues, un volet 12 qui se déplace contre ce fond. Ce volet 12 forme pour l'essentiel une paroi qui s'étend le long de l'axe de tambour 14 et contre le fond de la butée 9, c'est-à-dire contre la surface périphérique extérieure de la butée 9.

Dans une première position de ce volet 12, ou position escamotée, le volet 12 ne s'étend pas en vis-à-vis de l'entrefer et est donc entièrement contre la butée 9. Dans une deuxième position, il s'étend en vis-à-vis de cet entrefer et l'obture donc au moins partiellement. Ainsi, dans cette position, le volet 12 vient contre une préforme 2 qui déborde des butées 9 vers l'extérieur. Il forme alors une guillotine qui plaque la préforme 2 contre la butée 9 sur laquelle ledit volet 12 n'est pas monté.

Préférablement, chaque paire de butée 9 présente alors un tel volet 12, qui a pour fonction de retenir dans l'entrefer les préformes 2 qui y sont engagées.

Ces volets 12 peuvent donc passer d'une position active, où ils serrent les préformes 2 dans l'entrefer, à une position inactive, où ils n'agissent pas sur les préformes 2. On comprend que les préformes 2 doivent pouvoir facilement s'engager entre les butées 9 notamment en zone de prise 6 et que les volets 12 doivent alors se trouver en position inactive. Lorsque les butées 9 sont au-dessus des collerettes 3, il faut que les volets 12 soient en position active. Lorsque les préformes 2 sont en zone de sortie 7, les volets 12 doivent permettre le mouvement des préformes 2 et donc se trouver en position inactive. Le passage d'une position à l'autre peut se faire sous l'effet de la gravité par exemple, puisque le poids du volet 12 lui-même peut l'attirer vers l'autre butée 9 à certains endroits et aux orientations correspondantes, alors qu'il l'en éloignera à d'autres endroits et orientations correspondantes.

Alternativement, un mécanisme actif peut être prévu, qui vient agir sur les volets 12 pour les déplacer et les faire passer d'une position l'autre. Un tel mécanisme peut par exemple utiliser un principe de cames fixes, contre lesquelles viennent les volets 12 au cours de leur circulation et qui les font passer d'une position à l'autre et inversement.

La combinaison d'un jeu de volets 12 et d'une plaque 11 formant contre guide est bien sûr envisageable.

En outre, les volets 12 peuvent être coulissants ou pivotants avec le même effet.

Dans certaines réalisations avantageuses, le dispositif de convoyage 1 est muni d'un moyen de contrôle des préformes 2 avant fourniture en zone de sortie 7. Un tel moyen de contrôle est préférablement basé sur un principe de vision et scanne une zone fixe dans laquelle le moyen de convoyage 5 fait passer successivement les préformes 2 maintenues entre deux butées 9 successives. Cette zone de détection se trouve en amont de la zone de sortie 7. En cas de détection d'un défaut dans le lot de préformes 2 engagés dans une paire de butées 9, il est alors envisageable d'éjecter l'ensemble de ce lot. En cas de défaut majeur, cette éjection peut amener les préformes 2 à être dégagées et traitées comme des rebuts. S'il s'agit d'un simple défaut d'orientation, les préformes 2 peuvent alors simplement relâchées depuis une zone au-dessus de la zone de prise 6, ce qui a pour effet de les faire retomber en zone de prise 6.

Dans ces cas, les préformes 2 détectées comme mal orientées sont simplement lâchées par le moyen de verrouillage précités, du type à volets 12 et/ou à contre plaque 11, pour un recyclage.

Le dispositif de convoyage 1 est alors muni d'une unité de détection, qui est préférablement placée à l'intérieur du moyen de convoyage 5, et détecte en amont de la zone de sortie 7. Le dispositif de convoyage 1 est aussi muni d'un moyen de blocage contrôlé des préformes 2 bloquant ces dernières dans le moyen de convoyage 5, ainsi que d'une unité de contrôle, qui reçoit le signal de l'unité de détection et pilote le moyen de blocage contrôlé pour relâcher le lot de produits 2 détecté comme comprenant un produit 2 non satisfaisant.

Les préformes 2 subissent donc un mouvement, créé par le moyen de convoyage 5 qui engage celles bien orientées, entre une zone de prise 6, où le moyen de convoyage 5 évolue sous les préformes 2, et une zone de sortie 7 où les préformes 2 sont dégagées dans un mouvement le long de l'axe de tambour 14. Ce mouvement suit la boucle fermée le long de laquelle se déplace le moyen de convoyage 5. Dans certaines réalisations avantageuses, le dispositif de convoyage 1 est muni de divers équipements répartis sur le trajet des préformes et qui les traitent successivement au cours de ce trajet. La zone de sortie 7 peut se trouver à divers endroits après l'élévation et changement d'orientation des butées 9, notamment dans une partie supérieure, diamétralement opposée à la zone de prise 6, ou encore sur un côté, après une rotation de trois quarts de tour du moyen de convoyage 5 depuis la zone de prise 6.

De tels équipement sont préférablement disposés à l'intérieur du tambour ou de la boucle fermée que forme le moyen de convoyage 1 et agissent sur les produits 2 dans une zone de traitement qui leur est propre, le cas échéant. Ainsi, le dispositif de convoyage 1 peut être muni d'un ioniseur, qui traite les rangées successives de produits 2 qui défilent devant lui. Le dispositif de convoyage 1 peut aussi être muni d'un démêleur, sous forme de brosse rotative qui se trouve en vis-à-vis du moyen de convoyage 5 et qui fait sortir les préformes 2 enchâssées dans une autre préforme 2, qui est, elle, correctement orientée et maintenue entre les butées 9. Des solutions à base de lames flexibles sont aussi envisageables.

Préférablement, le dispositif de convoyage 1 est aussi muni d'un convoyeur d'entrée, du type convoyeur à bande sans fin. Ce convoyeur s'étend essentiellement horizontalement pour amener des préformes 2 à l'intérieur du moyen de convoyage 5, c'est-à-dire pour les déposer dans la zone de prise 6. Ce convoyeur d'entrée reçoit les préformes 2 en vrac sur sa surface supérieure et s'étend jusqu'à l'intérieur de la boucle fermée que forme le moyen de convoyage 5. Les produits 2 tombent alors du convoyeur d'entrée dans le moyen de convoyage 5.

Ainsi, dans les configurations selon l'invention, avec une zone de prise 6 en bas, les préformes 2 mal orientées retournent directement en zone de prise 6 pour être éventuellement traitées plus tard, ce qui aboutit à un fonctionnement en boucle fermée. Directement après la zone de prise 6, le moyen de convoyage 5 assure une élévation et un pivotement des préformes 2 jusqu'à environ une position horizontale, de sorte que seules celles bien orientées, et donc bien engagées, sont amenées plus loin par lui. Les autres, qui ne sont pas correctement maintenues, retombent en zone de prise 6 jusqu'à être finalement correctement orientées et entraînées.

Grâce à la configuration en boucle fermée à l'intérieur de laquelle les produits 2 sont disposés et engagés par le moyen de convoyage 5, le moyen de convoyage 5 se trouve initialement sous les produits 2, pour leur engagement, puis horizontalement à côté d'eux, puis se trouve au-dessus d'eux, préférablement au droit de la zone de prise 6.

L'avantage est alors qu'une fois le moyen de convoyage 5 au-dessus des préformes 2, celles qui sont mal orientées et qui auraient été entraînées malgré tout ne résistent pas à la force créée par leur poids et retombent verticalement en zone de prise 6. Cela contribue donc à assurer qu'un produit 2 mal orienté n'arrive pas en zone de sortie 7 mais est renvoyé en zone de prise 6. Changer progressivement l'orientation des préformes 2 par rapport à l'horizontal jusqu'à les mettre tête en bas, grâce à un changement progressif d'orientation des butées 9 le long de la boucle fermée, permet alors d'assurer que seules les préformes 2 correctement engagées et retenues dans le moyen de convoyage 5 arrivent finalement en zone de sortie 7. Prévoir un moyen de convoyage 5 en boucle fermée, à l'intérieur de laquelle se trouve le vrac de produits 2, aboutit à une configuration simple du moyen de convoyage 5.

Le moyen de convoyage 5 circule donc le long de la boucle fermée pour que ses butées 9 forment des surfaces d'appui qui se trouvent initialement sous les produits 2 en zone de prise 6 puis, après rotation progressive, au-dessus des produits 2.

Dans certaines réalisations possibles, les butées 9 sont déplaçables le long d'un rayon perpendiculaire à l'axe de tambour 14, pour un réglage de l'entrefer entre deux butées 9 successives. On comprend en effet que deux butées 9 sont d'autant plus éloignées l'une de l'autre qu'elles sont éloignées de l'axe de tambour 14. Ainsi, les déplacer radialement permet d'ajuster l'espace entre les butées 9. Le moyen de convoyage 5 présente alors préférablement des piliers fixes dont les extrémités sont prises dans les flasque 15 et assurant la tenue mécanique structurelle du tambour rotatif que forme le moyen de convoyage 5. Les butées 9 peuvent ainsi, par exemple, être fixées dans les flasques 15 dans des rainures radiales. Leur réglage en position peut être fait à l'aide d'un actionneur motorisé.

Grâce à l'invention, il est ainsi possible de proposer un principe d'orientation de préformes et de livraison à un poste en aval de préformes toutes orientées de façon homogène, le tout dans un empattement limité. Le débit de produits correctement orientés en sortie est aussi relativement élevé.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Dispositif de convoyage (1) sélectif de produits (2) qui comprennent une collerette (3) saillante et présentent une symétrie de rotation autour d'un axe produit (4), ledit dispositif comprenant un moyen de convoyage (5) mobile entraînant les produits (2) depuis une zone de prise (6) jusqu'à une zone de sortie (7),
dispositif **caractérisé en ce que**
le moyen de convoyage (5) s'étend le long d'une boucle fermée définissant son mouvement le long d'une direction de convoyage (8) et présente une succession de butées transversales (9) d'entraînement des produits (2), ledit moyen de convoyage (5) étant ouvert de son côté intérieur (10) pour permettre la réception de produits (2) se trouvant à l'intérieur de ladite boucle.

2. Dispositif selon la revendication 1, **caractérisé en ce que**
il comprend, en outre, un moyen de blocage qui retient les produits (2) dans le moyen de convoyage (5).

3. Dispositif selon la revendication 2, où
le moyen de blocage comprend une plaque (11) située en vis-à-vis du moyen de convoyage (5), du côté intérieur de la boucle fermée, et s'étendant au moins le long d'une partie de ladite boucle.

4. Dispositif selon l'une quelconque des revendications 2 ou 3, où
le moyen de blocage comprend des volets (12), embarqués sur le moyen de convoyage (5) du côté extérieur de la boucle fermée et mobiles pour limiter l'espace entre deux butées (9) dans lequel les produits (2) s'étendent.

5. Dispositif selon la revendication 4, où les volets (12) sont déplacés sous l'effet de la gravité.

6. Dispositif selon la revendication 4, où les volets (12) sont déplacés par engagement mécanique avec une came fixe.

7. Dispositif selon l'une quelconque des revendications 2 à 6 où
le moyen de blocage est piloté pour libérer, le cas échéant, les produits (2) au niveau d'une zone de rejet (13) se trouvant avant la zone de sortie (7) et à partir de laquelle ils peuvent alors quitter le moyen de convoyage (5).

8. Dispositif selon l'une quelconque des revendications 1 à 7, **caractérisé en ce que**
il comprend, en outre, un dispositif d'éjection qui agit en zone de sortie (7) pour pousser les produits (2) le long des butées (9) transversales et les éjecter du moyen de convoyage (5) transversalement à la direction de convoyage (8).

9. Dispositif selon l'une quelconque des revendications 1 à 8, où
le moyen de convoyage (5) prend la forme d'un tambour cylindrique creux présentant une symétrie de rotation autour d'un axe de tambour (14) s'étendant sensiblement horizontalement, les butées transversales (9) s'étendant le long de génératrices et étant maintenues espacées les unes des autres par une paire de flasques (15) auxquelles elles sont fixées par leurs extrémités, ledit tambour étant mobile en rotation autour de l'axe de tambour (14).

10. Procédé de convoyage de produits (2) qui ont une forme cylindrique et qui présentent, d'une part, une symétrie de rotation autour d'un axe produit (4), et, d'autre part, une collerette (3) circonférentielle saillante, ledit procédé comprenant, d'une part, une étape consistant essentiellement à élever les produits (2) au cours de leur déplacement, depuis une zone de prise (6) où les produits (2) se trouvent en vrac, jusqu'à une zone de sortie (7), et ce à l'aide d'un moyen de convoyage (5) mobile formant une boucle fermée, et, d'autre part, une étape consistant essentiellement à éjecter les produits (2) au niveau de la zone de sortie (7),
procédé **caractérisé en ce que**
l'élévation est sélective, le moyen de convoyage (5) entraînant les produits (2) situés à l'intérieur de la boucle fermée, orientés avec leur axe produit (4) traversant le moyen de convoyage (5) du côté intérieur vers le côté extérieur.

11. Procédé selon la revendication 10, **caractérisé en ce que**
il comprend une étape consistant essentiellement à bloquer en position les produits (2) entraînés par le moyen de convoyage (5).

12. Procédé selon la revendication 11, **caractérisé en ce que**
en cas de non-conformité, les produits (2) sont relâchés, avant leur passage par la zone de sortie (7), lorsqu'ils passent par une zone de rejet (13).

13. Procédé selon l'une quelconque des revendications 10 à 12, **caractérisé en ce que**
il comprend une étape d'éjection, au cours de laquelle les produits (2), dans la zone de sortie (7), sont dégagés du moyen de convoyage (5) transversalement au mouvement de ce dernier.

14. Procédé selon l'une quelconque des revendications 10 à 13, où
entre la zone de prise (6) et la zone de sortie (7), le moyen de convoyage (5) fait passer les produits (2) par au moins une zone de traitement située sur le trajet des produits (2) entre lesdites zones.
